# EUROPEAN PATENT SPECIFICATION

(11) **EP 1 899 933 B1**
(45) Date of publication and mention of the grant of the patent: **09.01.2013**
(21) Application number: 06756193.6
(22) Date of filing: 05.06.2006
(51) Int. Cl.: H04L 29/06, G06F 21/00

(54) **METHOD FOR DETECTING A MALICIOUS PACKED EXECUTABLE**
VERFAHREN ZUM DETEKTIEREN EINER BÖSWILLIGEN GEPACKTEN AUSFÜHRBAREN DATEI
PROCEDE DESTINE A LA DETECTION D'UN FICHIER EXECUTABLE COMPRESSE MALVEILLANT

(30) Priority: 01.07.2005 US 171393
(43) Date of publication of application: 19.03.2008
(73) Proprietor: SafeNet Data Security (Israel) Ltd., Tel Aviv 61110 (IL)
(72) Inventor: ZAMIR, SHAY, Nesher (IL); MARGALIT, Yanki, Ramat Gan (IL); MARGALIT, Dany, Ramat Chen (IL)
(74) Representative: Modiano, Micaela Nadia
(86) International application number: PCT/IL2006/000646
(87) International publication number: WO 2007/004205

(56) References cited:
- GB-A- 2 365 158
- US-A1- 2003 074 573
- US-A1- 2004 098 545
- US-B1- 6 594 686
- Lo, Alfred, "Software Protection and its Annihilation", pgs. 1-119 XP008123709

## Description

### Field of the Invention

The present invention relates to the field of malicious code detection. More particularly, the invention relates to a method and system for detecting a malicious packed executable.

### Background of the Invention

Self Extracting Archives and Packed Executables perform similar functions. Both are compressed programs, but a Self Extracting Archive is oriented to a convenient way of uncompressing the archive, while a Packed Executable is oriented to keep an executable program compressed, and un-compresses it only upon execution.

Nowadays it is common that viruses and other forms of malicious code are also in the form factor of a packed executable. The methods used in the prior art to detect a virus within packed executables are the same as those for detecting a virus in any other executable, such as virus signature, emulation, etc. Such a method is known from GB 2 365 158. Therefore, detecting malicious code within a packed executable presents the same drawbacks as those for detecting malicious code in any other executable program. For example, a virus signature can identify only a known virus.

It is an object of the present invention to provide a method and system for detecting a malicious packed executable.

It is another object of the present invention to provide a method and system for detecting a malicious packed executable, to be employed in a gateway or mail server.

It is a further object of the present invention to provide a method and system for detecting a malicious packed executable, which does not employ tracing or emulating.

It is a still further object of the present invention to provide a method and system for detecting a malicious packed executable, upon which new and unknown viruses can be detected.

Other objects and advantages of the invention will become apparent as the description proceeds.

The present invention is directed to a method for indicating if an executable file is malicious according to claim 1.

According to a preferred embodiment of the invention, indicating if the executable file is packed is carried out by the steps of: for at least one section of the file which is not a resource section: compressing at least a part of the section; indicating that the executable is packed if the compression ratio as a result of the compressing is less than a first threshold (e.g., about 10 percent).

The method may further comprise the step of: upon indicating the executable as malicious, invoking an alert procedure.

According to one embodiment of the invention, the criterion is whether the size of the executable file is less than a third threshold, e.g., 200 KB.

### Brief Description of the Drawings

The present invention may be better understood in conjunction with the following figures:
Fig. 1 schematically illustrates a packed executable, according to the prior art.
Fig. 2 is a flowchart of a method for indicating if an executable as malicious, according to a preferred embodiment of the invention.
Fig. 3 is a flowchart of a method for indicating if an executable is a malicious packed executable, according to a preferred embodiment of the invention.
Fig. 4 schematically illustrates a system that may be used for implementing the present invention.

### Detailed Description of Preferred Embodiments

The term "virus" is used herein to denote any form of malicious-code, such as self-propagating and/or -damaging executable or library, Trojans, Exploits and such. Nowadays viruses are frequently in a form factor of packed executable, in contrast to the form factor of infected files.

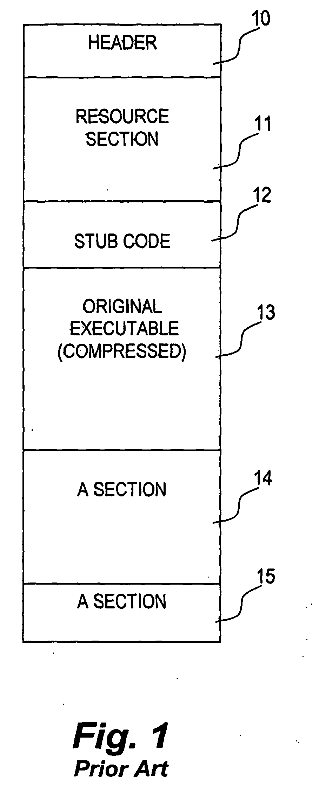

Fig. 1 schematically illustrates a packed executable, according to the prior art. The packed executable comprises a header 10, a resource section 11, a section 12 which comprises the stub code, a section 13 which comprises the compressed executable, and two additional sections 14 and 15.

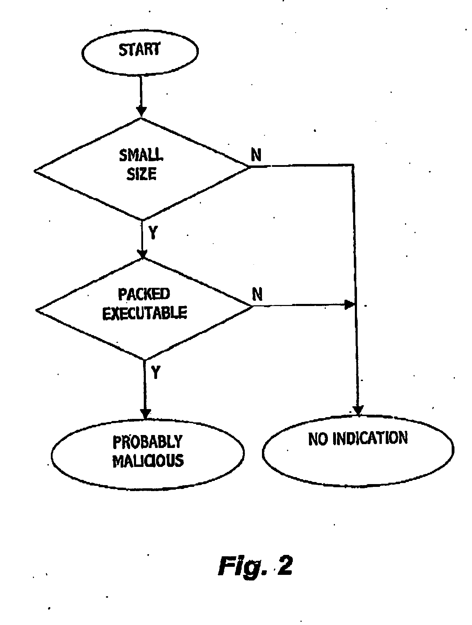

A research carried out by Aladdin Knowledge Systems Ltd. has revealed that an executable file has a high probability of being malicious if (a) it is a packed executable, and (b) it has a "small" size, typically up to 200KB. These criteria can be taken in consideration for indicating an executable as malicious, as illustrated in Fig. 2.

Fig. 2 is a flowchart of a method for indicating if an executable is malicious, according to a preferred embodiment of the invention. According to this embodiment if an executable file has a "small" size, typically up to 200 KB, and the file is a packed executable, then the executable is probably malicious.

The major obstacle in implementing the method described in Fig. 2 is indicating that an executable is a packed executable.

An executable file is divided by sections. For the sake of brevity, a section is referred to herein as a chunk of memory in which a part of the executable is stored. A more detailed description of this subject can be found in the Portable Executable File Format, which specifies the structure of an executable file, e.g., at:
http://msdn.microsoft.com/msdnmag/issues/02/02/PE/default.aspx

There is no standard structure for a packed executable, and therefore each packed executable may have a different structure. Accordingly, it is difficult to indicate whether an executable file is packed. It is common that in a packed executable, the stub code resides in one section, and the data is stored in a compressed form in another section. When the executable is executed, the stub code is activated. The stub code un-compresses the compressed executable into the computer's memory, thereby reconstructing the original executable, and then runs it, i.e., passes the control to the memory which comprises the original executable.

The stub code may uncompress the compressed code in a variety of ways. For example, it can uncompress it into a new section, into an existing section, into the same section, or even into an allocated memory. Thus, from this point of view the stub code operates as a program loader of an operating system.

In the art there are a variety of ways to store a compressed file within a section. Some packers create sections with zero physical size (i.e., they do not exist in executable file on the disk), although the virtual size thereof (i.e., the space the uncompressed section occupies) is not zero. On run time the stub code uncompresses the compressed code into this section, thereby avoiding allocating memory, and letting the loader of the operating system do the initial memory allocation. Some packers declare a virtual size which is significantly greater then their physical size (even if it is not zero), and uncompress the original code into this memory.

Since the structure of a packed executable does not comply with a standard, and since there are a variety of ways to "pack" an executable within another file, there is an obstacle in indicating which section comprises the executable (which usually is compressed). Moreover, in gateway servers and mail servers, the preferred way of inspecting a file is by analyzing the content of the file, in contrast to executing the file or emulating the file.

The code of a malicious executable is usually very compressed. This is due to the following reasons: The code of a malicious executable is usually developed in machine language, in contrast to high-level language. As such, the code of a malicious executable is typically compact, or in other words, when a malicious code is compressed, the compression ratio is significantly low in comparison to a program developed in a high-level programming language. In addition, as mentioned above, virus programmers pack the virus executable in order to minimize the size of the propagated virus file, to harden the indication as malicious by anti-virus utilities, and so forth.

A research carried out by Aladdin Knowledge Systems Ltd. has revealed that the typical compression ratio of a malicious packed executable is about 90 percent and above. Therefore, according to a preferred embodiment of the present invention, a major criterion that can be used for indicating whether an executable is malicious is a compression ratio of 10 percent and less of a section of the executable. Thus, instead of analyzing the structure of an executable in order to indicate if the executable is a packed executable, according to a preferred embodiment of the invention the compression ratio of its sections is examined.

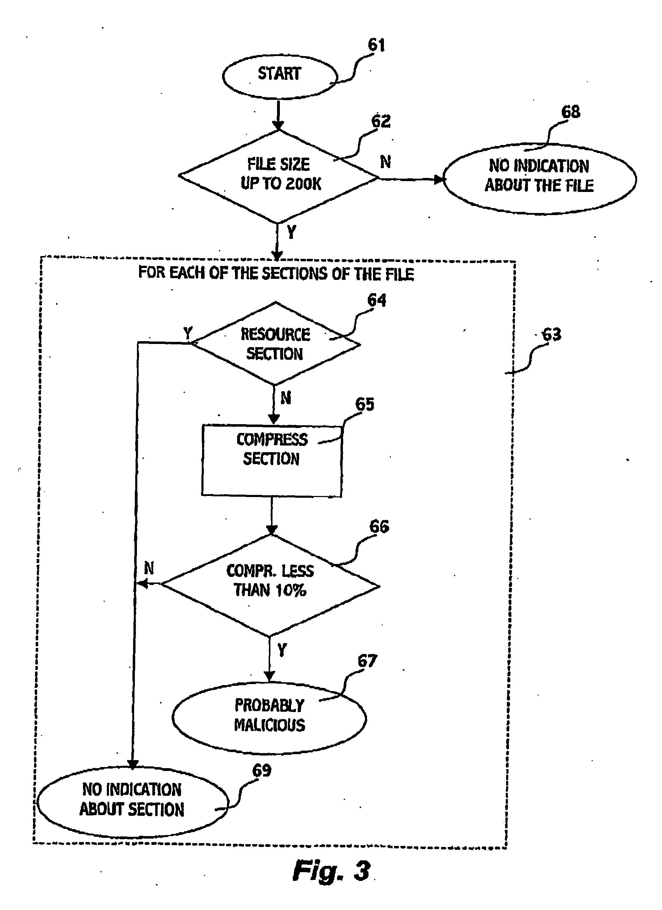

Fig. 3 is a flowchart of a method for indicating if an executable is a malicious packed executable, according to a preferred embodiment of the invention. The rationale behind the method is detecting the presence of a highly compressed (e.g., 90 percent and above) section within an executable. As illustrated in Fig. 3, if a section is not a resource section, then the section, or a part of it, is compressed, and if the compression fails to significantly reduce its size, there is a high probability that the executable is malicious packed executable. For the sake of brevity, the flowchart of Fig. 3 is simplified, and more efficient results can be achieved.

Resource sections are excluded from this rationale because they typically comprise a multimedia content, and multimedia content cannot be efficiently compressed by common compression methods, e.g., the method that is employed by Winzip® and PKZIP.

The process begins at block 61.

From block 62, if the size of the file is greater than a 200KB, then the process ends in block 68 with no indication about the maliciousness of the executable, otherwise the flow continues with block 63.

Block 63 denotes a loop in which all the sections of the executable are examined:

From block 64, if the currently tested section is a resource section, then the flow continues with block 69, which denotes that no indication about the maliciousness of the section can be concluded; otherwise the flow continues with block 65.

At block 65 the section is compressed. Practically, a copy of the section is compressed, and not the original section, since compressing the original section violates the structure of the executable.

From block 66, if the compression has produced poor results, e.g., less than 10%, then it points out that the block was already compressed. In this case, the flow continues with block 67, in which the executable is indicated as possibly being a malicious compressed executable. Otherwise, the flow continues with block 69, which denotes that no indication can be obtained from the section by this method. From block 67, the process can be ended without processing the rest of the sections, since the file has already been indicated as malicious compressed executable.

In contrast to metering the compression ratio by the relation between the size of the uncompressed section and the size of the original section, which can be carried out only during run time or emulation, according to one embodiment of the present invention the section is compressed. Moreover, the metering of the compression ratio does not have to be carried out in a specific time, such as run time or during the emulation time. Furthermore, the metering is carried out by analyzing a section as data, not as an operative executable.

If the result of the compression is "poor", e.g., less than 10 percent, then it is reasonable that the section is already compressed (since compressing a file multiple times provides poor compression results), which may indicate malicious code. A conjunction between the compression ratio of a section and other parameters provides a good indication that an executable is malicious. One of the parameters that can be used for this purpose is the size of the executable file.

It should be noted that from a practical point of view, the figures that have been mentioned above, i.e., 10%, 200KB, etc., are examples. When implementing the method these numbers are thresholds, which a user / operator can amend in order to decrease the false positives.

In the event that an executable is indicated as having a high probability of being malicious, an alert procedure may be carried out, e.g., putting the executable into quarantine for a period of time (e.g., one or more days), until new updates arrive to the anti-virus utilities, or simply issuing a warning to the user. In a mail scanning anti virus product, the attachment that contains the executable may be removed and/or a disclaimer may be added to the mail warning about the probability of the attachment being a virus or other malicious code, and/or the subject of the mail may be changed to clearly mark the potential danger.

Packed executables typically use a short and efficient stub of code which decompresses and/or decrypts a bulk of compressed and/or encrypted data, which was the original code/data. Since this process does not have much interaction with the operating system, the stub uses a "small" set of API functions. For example, under the Windows™ operating system observations have revealed that the stub mostly uses the LoadLibrary() and GetProcAddress() functions, and sometimes VirtualAlloc() and VirtualFree(). This may be used for indicating that an executable file is a packed executable. Thus, if the amount of functions in a list of LoadLibrary, GetProcAddress, VirtualAlloc, VirtualFree (or an equivalents thereof) of a file is less than a second threshold, then indicating the file as packed.

The "amount of functions" may refer to the number of types of API functions, the number of types of API functions in comparison to a typical application, to a small number of functions (e.g. less than 3) of the above list of function, only the LoadLobrary() and GetProcAddress() functions, only a small total number of API calls, and so forth.

By analyzing the import table of an executable (which is a part of the PE format), it is possible to determine the set of API functions the executable will initially use. Most executables use a rather large number of API functions (above 10) and declare them in the import table; stubs, on the other hand, use only a few (2-8 in general) which usually comprise of LoadLibrary(), GetProcAddress(), VirtualAlloc(), and VirtualFree(). The original import table (that belongs to the original executable) is generally compressed or put aside and will be put into place by the stub before executing the original program.

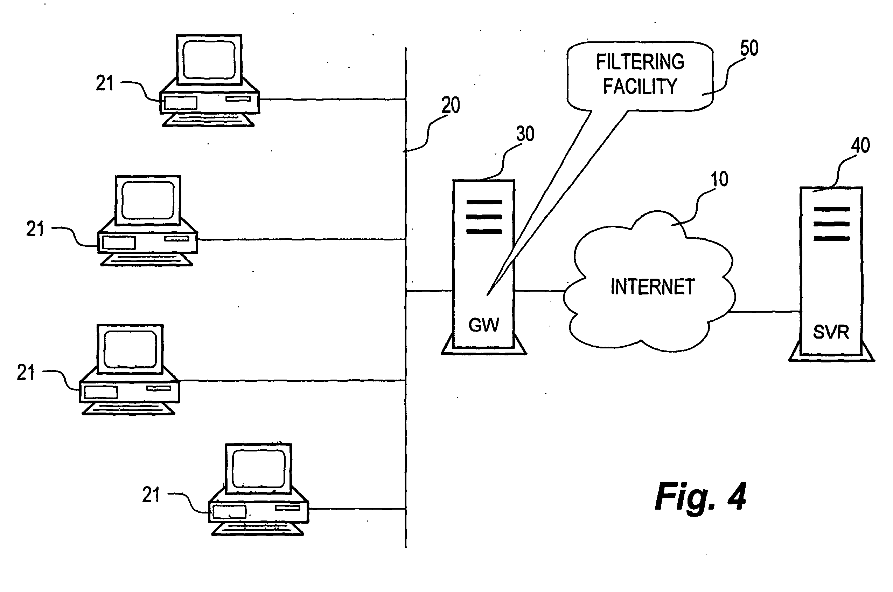

Fig. 4 schematically illustrates a system that may be used for implementing the present invention. The computers 21 are connected to the local area network 20. The local area network 20 is connected to the Internet 10. The gateway server 30 is interposed between the local area network 20 and the Internet 10. The Internet server 40 hosts web sites. A browser being executed on a computer 21 that addresses to the web site hosted by the Internet server 40 causes files to be transferred from the Internet server 40 to the computer 21 through the gateway server 30. A filtering facility 50 inspects data traffic passing through the gateway server 30. The filtering facility typically collects the communication packets passing through the gateway server 30, and performs filtering processing on the collected data. The present invention can be implemented as a part of the filtering facility, since such a facility already collects packets passing through the gateway. The invention may be implemented also at a mail server. Actually, the invention may be implemented in any traffic server disposed in a data communication channel. Moreover, the invention may be implemented at an end user's machine.

It should be noted that the size of a file is only an exemplary criterion and other criterions may be used for indicating if a packed executable is malicious. For example, a research carried out by Aladdin Knowledge Systems Ltd. has revealed that malicious packed executables are usually sent via email in contrast to web pages or FTP. Thus, if an executable file is indicated as packed, and a filtering facility indicates that the file has been send via email, in contrast to FTP or web page, then there is a high probability that the file is malicious.

Those skilled in the art will appreciate that the invention can be embodied in other forms and ways, without losing the scope of the invention. The embodiments described herein should be considered as illustrative and not restrictive.

## Claims

1. A method for indicating if an executable file is malicious, the method comprising indicating if said executable file is packed,
**characterized by** determinmg (67) said executable file as probably malicious if both said executable file is packed (66) and the size of said executable file is less than a first threshold (62).

2. A method according to claim 1, wherein said indicating if said executable file is packed is carried out by the steps of:
for at least one section (13,14, 15) of said file which is not a resource section (11):
- compressing (65) at least a part of said section (13,14, 15);
- indicating (67) that said executable file is packed if the compression ratio as a result of said compressing is less than a second threshold (66).

3. A method according to claim 2, wherein said second threshold is about 10 percent (66).

4. A method according to any of claims 1 to 3, wherein said first threshold is about 200 KB (62).

5. A method according to any of claims 1 to 4, further comprising upon indicating said executable as probably malicious (67), invoking an alert procedure.

## Patentansprüche

1. Ein Verfahren zum Anzeigen, ob eine ausführbare Datei bösartig ist, wobei das Verfahren das Anzeigen, ob die ausführbare Datei komprimiert ist, umfasst,
**gekennzeichnet durch** die Bestimmung (67) der ausführbaren Datei als wahrscheinlich bösartig, wenn sowohl die ausführbare Datei komprimiert ist (66) als auch die Größe der ausführbaren Datei geringer ist als ein erster Schwellenwert (62).

2. Ein Verfahren gemäß Anspruch 1, worin das Anzeigen, ob die ausführbare Datei komprimiert ist, durch folgende Schritte ausgeführt wird:
für mindestens einen Abschnitt (13, 14, 15) der Datei, der kein Ressourcenabschnitt (11) ist:
- Komprimieren (65) zumindest eines Teils des Abschnitts (13, 14, 15),
- Anzeigen (67), dass die ausführbare Datei komprimiert ist, wenn das Kompressionsverhältnis als Ergebnis des Komprimierens kleiner ist als ein zweiter Schwellenwert (66).

3. Ein Verfahren gemäß Anspruch 2, worin der zweite Schwellenwert ungefähr 10 Prozent beträgt (66).

4. Ein Verfahren gemäß einem beliebigen der Ansprüche 1 bis 3, worin der erste Schwellenwert ungefähr 200 KB beträgt (62).

5. Ein Verfahren gemäß einem beliebigen der Ansprüche 1 bis 4, das weiter nach dem Anzeigen der Ausführbaren als wahrscheinlich bösartig (67) das Aufrufen einer Alarmprozedur umfasst.

## Revendications

1. Procédé destiné à indiquer si un fichier exécutable est malveillant, le procédé comprenant d'indiquer si ledit fichier exécutable est compressé,
**caractérisé par** le fait de déterminer (67) que ledit fichier exécutable est probablement malveillant si tant soit ledit fichier exécutable est compressé (66), tant soit la taille dudit fichier exécutable est inférieure à un premier seuil (62).

2. Procédé selon la revendication 1, dans lequel ladite indication si ledit fichier exécutable est compressé, est réalisée par les étapes de :
pour au moins une section (13, 14, 15) dudit fichier qui n'est pas une section de ressources (11) :
- compresser (65) au moins une partie de ladite section (13, 14, 15) ;
- indiquer (67) que ledit fichier exécutable est compressé si le rapport de compression, en tant que résultat de ladite compression, est inférieur à un second seuil (66).

3. Procédé selon la revendication 2, dans lequel ledit second seuil est environ 10 pourcent (66).

4. Procédé selon l'une quelconque des revendications 1 à 3, dans lequel ledit premier seuil est environ 200 KB (62).

5. Procédé selon l'une quelconque des revendications 1 à 4, comprenant en outre, suite à l'indication que ledit fichier est probablement malveillant (67), d'invoquer une procédure d'alerte.
